Europäisches Patentamt

European Patent Office

Office européen des brevets

(19)

(11) **EP 1 044 324 B1**

(12) **EUROPÄISCHE PATENTSCHRIFT**

| | |
|---|---|
| (45) Veröffentlichungstag und Bekanntmachung des Hinweises auf die Patenterteilung:<br>**06.08.2003 Patentblatt 2003/32** | (51) Int Cl.⁷: **F02M 25/12** |
| (21) Anmeldenummer: **99962040.4** | (86) Internationale Anmeldenummer:<br>**PCT/DE99/03425** |
| (22) Anmeldetag: **26.10.1999** | (87) Internationale Veröffentlichungsnummer:<br>**WO 00/025014 (04.05.2000 Gazette 2000/18)** |

(54) **VORRICHTUNG ZUR SAUERSTOFFANREICHERUNG IN DER VERBRENNUNGSLUFT VON VERBRENNUNGSMOTOREN**

OXYGEN ENRICHMENT DEVICE FOR THE COMBUSTION AIR OF INTERNAL COMBUSTION ENGINES

DISPOSITIF POUR ENRICHIR EN OXYGENE L'AIR DE COMBUSTION DES MOTEURS A COMBUSTION INTERNE

| | |
|---|---|
| (84) Benannte Vertragsstaaten:<br>**DE ES FR GB IT SE** | (74) Vertreter: **Berngruber, Otto, Dr. Dipl.-Chem. et al Patentanwälte**<br>**Haft, von Puttkamer**<br>**Berngruber, Czybulka**<br>**Franziskanerstrasse 38**<br>**81669 München (DE)** |
| (30) Priorität: **28.10.1998 DE 19849791** | |
| (43) Veröffentlichungstag der Anmeldung:<br>**18.10.2000 Patentblatt 2000/42** | |
| | (56) Entgegenhaltungen: |
| (73) Patentinhaber: **Pletschacher, Christine**<br>**83317 Teisendorf (DE)** | **EP-A- 0 237 816**   **EP-A- 0 394 494**<br>**DE-A- 3 018 634**   **DE-A- 4 201 423**<br>**DE-U- 9 401 276**   **US-A- 5 553 591** |
| (72) Erfinder: **PLETSCHACHER, Alexander**<br>**D-83317 Teisendorf (DE)** | |

**Beschreibung**

Die Erfindung bezieht sich auf eine Vorrichtung zur Anreicherung des Sauerstoffs in der Verbrennungsluft von Verbrennungsmotoren mittels einer Gaszentrifuge.

Da mit Zunahme des Sauerstoffgehalts in der Luft die Abbrandgeschwindigkeit erhöht und dadurch die Leistung gesteigert bzw. der Kraftstoffverbrauch herabgesetzt werden kann, ist man seit langem bestrebt, Verbrennungsmotoren mit sauerstoffangereicherter Verbrennungsluft zu betreiben.

So ist es aus DE 195 43 884 C2 bekannt, den Sauerstoff der Luft durch Gasdiffusion durch eine Membran anzureichern. Da mit einer solchen Membran nur bei niedriger Motordrehzahl genügend Sauerstoff angereichert werden kann, weist die bekannte Vorrichtung einen Druckbehälter auf, in dem komprimierte, mit Sauerstoff angereicherte Luft für hohe Drehzahlen zur Verfügung steht. Die bekannte Vorrichtung ist damit mit einem erheblichen apparativen Aufwand verbunden.

Auch ist aus der DE 195 45 397 A1 bereits eine Vorrichtung bekannt, wobei eine mehrstufige, elektrisch angetriebene Gaszentrifuge vorgeschlagen wird, mit der der Sauerstoffgehalt auf möglichst 99% angereichert werden soll. Wie man eine solche Sauerstoffanreicherung auf wirtschaftliche Weise erzielen können soll, ist dieser Druckschrift jedoch nicht andeutungsweise entnehmbar.

Aus der DE 9401276 U und der DE 3018634 A ist jeweils bekannt, ein sauerstoffabscheidegerät mittels einer Abgasturbine anzutreiben.

Bei Flugzeugen ist es zur temporären Leistungssteigerung bekannt, die Verbrennungsluft durch Distickstoffmonoxid zu ersetzen, welches im Gegensatz zu Luft mit einem Sauerstoffgehalt von 21 Vol.-% gegenüber 78 Vol.-% Stickstoff einen Sauerstoffgehalt von 33 % aufweist. Bei herkömmlichen Kraftfahrzeugen kann Distickstoffmonoxid schon aus logistischen Gründen aber auch wegen des erhöhten Kosten- und apparativen Aufwands Luft jedoch nicht ersetzen.

Aufgabe der Erfindung ist es daher, auf wirtschaftliche Weise ohne größeren apparativen Aufwand drehzahlunabhängig einem Verbrennungsmotor Verbrennungsluft zur Verfügung zu stellen, welche einen hinreichend hohen Grad an Sauerstoffanreicherung aufweist.

Dies wird erfindungsgemäß mit der im Anspruch 1 gekennzeichneten Vorrichtung erreicht. In den Unteransprüchen sind vorteilhafte Ausgestaltungen der erfindungsgemäßen Vorrichtung wiedergegeben.

Nach der Erfindung wird die Gaszentrifuge, mit der der Sauerstoff in der Verbrennungsluft angereichert wird, von einer Abgasturbine angetrieben. Damit wird die andernfalls verlorene kinetische Energie der Auspuffgase zum Antrieb der Gaszentrifuge genutzt. Die erfindungsgemäße Vorrichtung ermöglicht damit einen wirtschaftlichen Betrieb.

Die Drehzahl der den Sauerstoffgehalt der Verbrennungsluft anreichernden Gaszentrifuge und damit die Erhöhung des Liefergrades, also der in die Zylinder gelangenden mit Sauerstoff angereicherten Luftmasse ist damit über das Medium Abgas mit der Motordrehzahl verknüpft. Das bedeutet, daß mit steigender Motordrehzahl und damit steigender Strömungsgeschwindigkeit des Abgases die Rotordrehzahl der Gaszentrifuge und damit der Liefergrad der mit Sauerstoff angereicherten Verbrennungsluft in die Zylinder erhöht wird.

Der Realisierung der erfindungsgemäßen Vorrichtung kommt entgegen, daß zur Turboaufladung bereits Abgasturbinen mit hohen Dauerdrehzahlen von 240000 U/min zur Verfügung stehen.

Schon Gaszentrifugendrehzahlen von beispielsweise 80000 Umdrehungen/Minute reichen aber aus, um eine Sauerstoffanreicherung der Verbrennungsluft mit einem beispielsweise Distickstoffmonoxid entsprechenden Sauerstoffgehalt von 33 Vol.-% und mehr zu erzielen.

Dies wird durch folgende Berechnung verdeutlicht, bei der eine Gaszentrifuge zugrundegelegt wird, die in einem Zylinderinnenraum ein von der Verbrennungsluft axial durchströmtes Laufrad aufweist:

Die Teilchenanzahldichte $n_o$ eines Gases, also die Anzahl der Teilchen pro Volumeneinheit, beträgt bei Atmosphärendruck, also an der Lauf radachse, an der keine Zentrifugalkraft auf die Teilchen wirkt

$$n_o = \rho_o/m \qquad\qquad (1)$$

worin $\rho$ die Dichte des Gases bei Atmosphärendruck und m die Masse eines Moleküls des Gases bedeutet.

Für Stickstoff ($N_2$) mit $\rho_o = 1{,}2505 \cdot kg \cdot m^{-3}$ und $m = 4{,}65175067 \cdot 10^{-26} \cdot k$ ergibt sich damit an der Laufradachse eine Teilchenanzahldichte $n_o$ ($N_2$) von

$$n_o \, (N_2) = 1{,}2505 \cdot kg \cdot m^{-3}/4{,}65175097 \cdot 10^{-26} \cdot kg$$

$$= 2{,}688235051 \cdot 10^{25} \, m^{-3}$$

$$= 1,000596565 \cdot N_L$$

wobei $N_L$ die Loschmidt'sche Zahl mit $N_L = 2,68663 \cdot 20^{25} \cdot m^{-3}$ ist.

Für Sauerstoff $O_2$ mit $\rho_o = 1,429$ kg $\cdot m^3$ und $m = 5,31362901 \cdot 10^{-26}$ kg ergibt sich damit an der Laufradachse eine Teilchenanzahldichte von

$$n_o(O_2) = 1,000996982 \cdot N_L.$$

Mit zunehmendem Radius r von der Laufradachse ergibt sich eine Teilchenanzahldichte für Stickstoff $n(N_2)$ von

$$n(N_2) = 1,000596565 \cdot N_L \cdot \exp\{(6,7656339 \cdot 10^{-8} \cdot k \cdot (N_2)) \cdot$$

$$[n_2]^2 \cdot r^2 \cdot m^{-2}\}$$

während für die Teilchenanzahldichte des Sauerstoffs gilt

$$n(O_2) = 1,000996982 \cdot N_L \cdot \exp\{(7,7255698 \cdot 10^{-8} \; k \, (O_2)) \cdot [n_2]^2 \cdot$$

$$r^2 \cdot m^{-2}\}$$

worin der Exponentialausdruck in der geschwänzten Klammer sich aus dem Boltzmannschen Energieverteilungsgesetz ergibt.

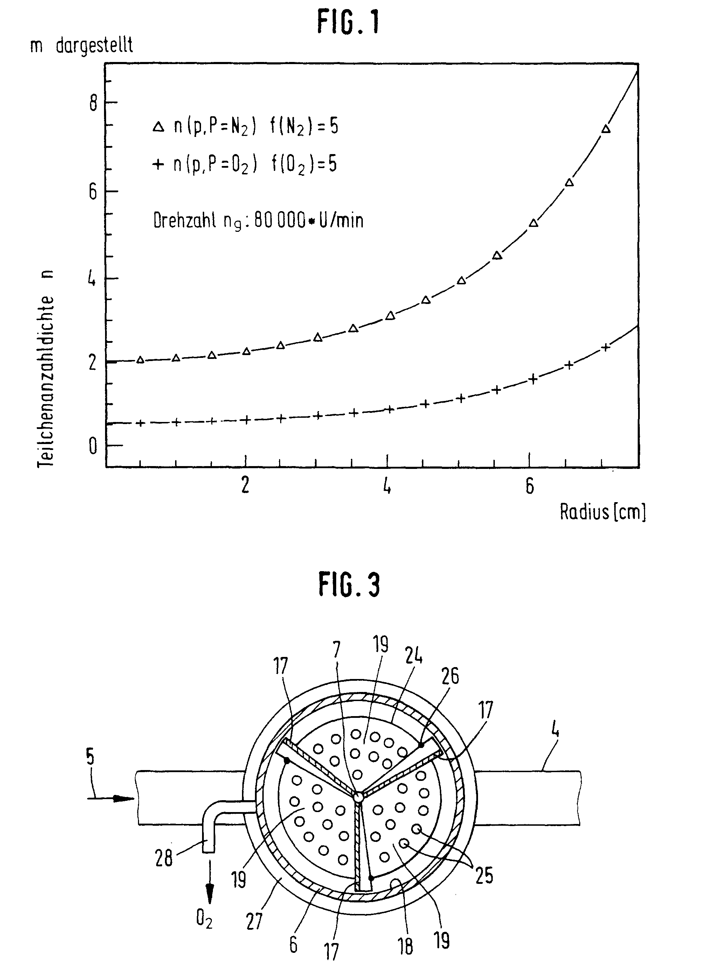

In Abhängigkeit vom Radius von der Laufradachse der Gaszentrifuge ergibt sich damit für Stickstoff und Sauerstoff in der Luft die in dem Diagramm gemäß Fig. 1 dargestellte Teilchenanzahldichte. Die divergierenden Kurven für Sauerstoff ($O_2$) und Stickstoff ($N_2$) in diesem Diagramm dokumentieren eine mit zunehmendem Abstand von der Laufradachse sukzessive zunehmende relative Entmischung der Sauerstoff- und Stickstoffmoleküle bei einer Laufraddrehzahl von 80000 Umdrehungen/Minute. Das heißt, bei dieser Laufraddrehzahl und einem Radius von 7,5 Zentimetern des Laufrades bzw. des Zylinderinnenraums der Gaszentrifuge erhöht sich die Teilchenanzahldichte des Sauerstoffs in der Luft von etwa 0,5 $10^{25} \; m^{-3}$ an der Laufradachse auf etwa 2,7 $\cdot 10^{25} \; m^{-3}$, also um mehr als das Fünffache, hingegen bei Stickstoff von etwa 2,0 $\cdot 10^{25} \; m^{-3}$ auf etwa 8,7 $10^{25} \; m^{-3}$, also nur um das 4,4-Fache. Das heißt, bei einer Drehzahl von 80000 Umdrehungen/Minute und einem Zylinderrauminnenradius von 7,5 Zentimetern beträgt der Sauerstoffgehalt an der Zylinderinnenwandung ca. 40 Vol.-% gegenüber 20 Vol.-% in der der Gaszentrifuge zugeführten Luft.

Mit der erfindungsgemäßen Vorrichtung kann damit ohne weiteres eine Leistungssteigerung des Motors erreicht werden, die der bei Zufuhr von Distickstoffmonoxid entspricht.

Während bei mit normaler Verbrennungsluft betriebenen Motoren mit höherer Drehzahl auch der Anteil der nur teilweise verbrannten Kohlenwasserstoffe ansteigt, weil nicht genug Zeit zur vollständigen Verbrennung zur Verfügung steht, ist mit der erfindungsgemäßen Vorrichtung durch den angereicherten Sauerstoffgehalt in der Verbrennungsluft sichergestellt, daß auch bei höheren Drehzahlen eine vollständige Verbrennung stattfindet und damit der Schadsstoffgehalt, insbesondere der CO-Gehalt, der Gehalt an Rußteilchen und dergleichen nicht oder nur teilweise oxidierten Kohlenstoffverbindungen deutlich reduziert wird.

Es versteht sich, daß bei weiterer Erhöhung der Drehzahl des Laufrades der Gaszentrifuge und/oder zunehmendem Radius des Zylinderinnenraums der Gaszentrifuge eine noch stärkere Sauerstoffanreicherung erzielbar ist, wodurch letztendlich auch der Gehalt an Stickoxiden im Abgas gegenüber herkömmlichen Motoren reduziert werden kann, desgleichen die Ozonbildung, für die insbesondere Stickstoffoxide als Vorläufersubstanzen verantwortlich gemacht werden.

Die nachstehenden Beispiele dienen der weiteren Erläuterungen der Erfindung, darin zeigen:

Fig. 1 ein Diagramm, das die Sauerstoffanreicherung der Luft bei vorgegebener Laufraddrehzahl der Gaszentrifuge in Abhängigkeit vom Radius zeigt;

Fig. 2 einen Längsschnitt einer Ausführungsform der erfindungsgemäßen Vorrichtung in schematischer Wiedergabe; und

Fig. 3 einen Schnitt durch die Gaszentrifuge entlang der Linie III-III nach Fig. 2.

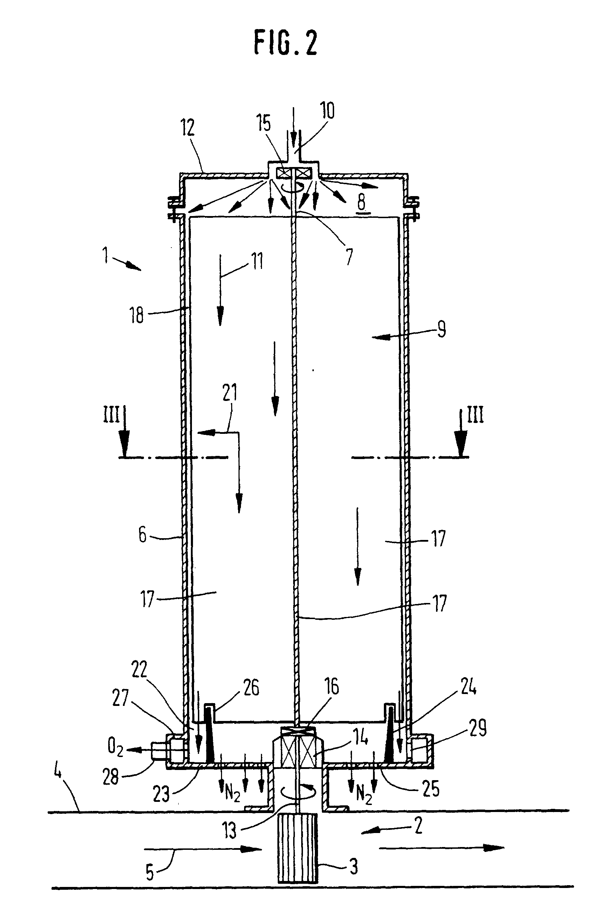

Gemäß Fig. 2 und 3 weist die Vorrichtung zur Anreicherung des Sauerstoffs in der Verbrennungsluft eines nicht dargestellten Verbrennungsmotors eine Gaszentrifuge 1 auf, die durch eine Abgasturbine 2 angetrieben wird. Das Turbinenrad 3 der Abgasturbine 2 ist dazu in der Auspuffleitung 4 des Verbrennungsmotors angeordnet, wobei es durch die durch die Pfeile 5 dargestellten Verbrennungsabgase des Verbrennungsmotors angetrieben wird.

Das Gehäuse 6 der Gaszentrifuge 1 ist an dem Auspuffrohr 4 angeflanscht, und zwar derart, daß die Längsachse der Gaszentrifuge 1 senkrecht zur Längsachse der Auspuffleitung 4 angeordnet ist.

Im Zylinderinnenraum 8 der Gaszentrifuge 1 ist ein Laufrad 9 drehbar gelagert, welches von der durch die Pfeile 11 dargestellten Verbrennungsluft axial durchströmt wird, die an der einen Stirnwand 12 über eine mittige Eintrittsöffnung 10 in den Raum 8 eintritt.

Die Drehachse 7 des Laufrades 9 steht damit gleichfalls senkrecht zur Längsachse des Auspuffrohres 4. Sie verläuft zugleich koaxial zur Drehachse 13 der Abgasturbine 2, deren Turbinenrad 3 radial von dem Abgas 5 angeströmt wird. Zur beidseitigen Lagerung des Laufrades 9 sind Radial- und Axiallager 14, 15, 16 vorgesehen.

Das Laufrad 9 weist z.B. drei Schaufeln 17 auf, die sich von der Drehachse 12 zur Zylinderinnenwand 18 erstrecken, und zwar so weit, daß lediglich ein Toleranzen aufnehmender Spalt an der Innenwand 18 entsteht. Damit werden zwischen den Schaufeln 17 und der Innenwand 18 Kammern 19 gebildet, welche von der Verbrennungsluft 11 durchströmt werden. Die Luft in diesen Kammern 19 läuft entsprechend der Drehgeschwindigkeit des Laufrades 9 um, so daß auf die Moleküle in der Luft in den Kammern 19 die durch den Pfeil 21 dargestellte Zentrifugalkraft einwirkt, mit der Folge, daß, wie vorstehend im Zusammenhang mit dem Diagramm nach Fig. 1 erläutert, zunehmend mit dem Abstand von der Drehachse 7, also im Bereich der Zylinderwand 18, eine Anreicherung von Sauerstoff in der Verbrennungsluft 11 erfolgt.

Damit eine hinreichend lange Einwirkungsdauer der Zentrifugalkraft gewährleistet ist, besitzen die Schaufeln 17 eine entsprechend große Länge in Axialrichtung, und zwar ist ihre axiale Länge größer als der Radius des Zylinderinnenraumes 8, insbesondere mehr als doppelt so groß als der Laufradradius.

Es versteht sich von selbst, daß der Innenraum 8 nicht unbedingt zylindrisch ausgebildet sein muß, sondern auch eine andere rotationssymmetrische Form aufweisen kann, z.B. mehr oder weniger stark konisch ausgebildet sein kann. Die axiale Länge der Schaufeln 17 sollte dann zumindest größer sein als der größte Radius des Laufrads 9.

Am auslaßseitigen Axialende der Gaszentrifuge ist eine ringförmige Aufnahmerinne 22 an der Zylinderinnenwand 8 angeordnet, in die die mit "$O_2$"bezeichnete, mit Sauerstoff angereicherte Verbrennungsluft eintritt. Zur Bildung der Aufnahmerinne 22 ist an der betreffenden Stirnwand 23 des Gehäuses 6 eine konzentrische Trennwand 24 befestigt. Die sauerstoffabgereicherte, also stickstoffreiche Luft, die in Fig. 1 mit "$N_2$" bezeichnet ist, tritt durch Austrittsöffnungen 25 in die Atmosphäre aus, welche in der Stirnwand 23 zwischen der Aufnahmerinne 22 und der Laufradachse 12 vorgesehen sind. Um die Aufnahmerinne 22 gegenüber dem stickstoffreicheren, radial inneren Bereich mit den Austrittsöffnungen 25 abzudichten, weisen die Schaufeln 17 Schlitze 26 auf, in die die Trennwand 24 ragt.

Die mit Sauerstoff angereicherte Verbrennungsluft $O_2$ tritt durch Durchgangsöffnungen 29 in der Zylinderwand 18 in einen Ringkanal 27 ein, und strömt über eine an den Ringkanal 27 angeschlossene Leitung 28 zum Motor.

Zur Erhöhung des Luftdurchsatzes durch die Gaszentrifuge 1 und damit der in die Zylinder des Motors gelangenden sauerstoffangereicherten Luftmasse sind die Laufradschaufeln 17, wie in Fig. 3 dargestellt, zur Laufradachse 12 leicht schräg gestellt angeordnet. Statt dessen kann jedoch auch ein zusätzlicher Propeller an der Laufraddrehachse 12 vorgesehen sein, während die Laufradschaufeln 17 achsparallel ausgebildet sein können.

**Patentansprüche**

1. Vorrichtung zur Anreicherung des Sauerstoffs in der Verbrennungsluft von Verbrennungsmotoren mit einer Gaszentrifuge (1), die durch eine von den Verbrennungsabgasen (5) angetriebene Abgasturbine (2) angetrieben wird, **dadurch gekennzeichnet, daß** im Innenraum (8) der Gaszentrifuge (1) ein von der Verbrennungsluft (11) axial durchströmtes Laufrad (9) zum Aufbringen einer Zentrifugalkraft auf die Moleküle in der Luft vorgesehen ist, dessen Schaufeln (17) eine axiale Länge besitzen, die größer als der größte Radius des Laufrades (9) ist.

2. Vorrichtung nach Anspruch 1, **dadurch gekennzeichnet, daß** das Gehäuse (6) der Gaszentrifuge (1) an der Auspuffleitung (4) angeflanscht ist.

3. Vorrichtung nach Anspruch 1, **dadurch gekennzeichnet, daß** die Laufradschaufeln (17) und die Innenwand (18) der Gaszentrifuge (1) von der Verbrennungsluft (12) durchströmte Kammern (19) bilden.

4. Vorrichtung nach Anspruch 3, **dadurch gekennzeichnet, daß** die Laufradschaufeln (17) zur Erhöhung des Luftdurchsatzes durch die Gaszentrifuge (1) zumindest teilweise zur Laufraddrehachse (12) schräg gestellt angeordnet sind.

5. Vorrichtung nach einem der Ansprüche 1 bis 4, **dadurch gekennzeichnet, daß** am auslaßseitigen Axialende der Gaszentrifuge (1) eine ringförmige Aufnahmerinne (22) vorgesehen ist, in die die mit Sauerstoff angereicherte Verbrennungsluft ($O_2$) eintritt.

6. Vorrichtung nach Anspruch 5, **dadurch gekennzeichnet, daß** die Aufnahmerinne (22) durch eine konzentrische Trennwand (24) gebildet wird.

7. Vorrichtung nach Anspruch 6, **dadurch gekennzeichnet, daß** die Trennwand (24) in in den Laufradschaufeln (17) vorgesehene Schlitze (26) ragt.

8. Vorrichtung nach einem der Ansprüche 5 bis 7, **dadurch gekennzeichnet, daß** die sauerstoffabgereicherte Luft ($N_2$) durch Austrittsöffnungen (25) im Gaszentrifugengehäuse (6) zwischen der Aufnahmerinne (22) und der Laufraddrehachse (12) in die Atmosphäre austritt.

**Claims**

1. An apparatus for enriching oxygen in the combustion air of internal-combustion engines with a gas centrifuge (1) which is driven by an exhaust gas turbine (2) driven by combustion exhaust gases (5), **characterized in that** a rotor (9) axially flowed through by combustion air (11) is provided in the interior (8) of the gas centrifuge (1) fox applying a centrifugal force to the molecules in the air, the axial length of the blades (17) of the rotor being greater than the greatest radius of rotor (9).

2. An apparatus according to claim 1, **characterized in that** the housing (6) of the gas centrifuge (1) is flanged to the exhaust pipe (4).

3. An apparatus according to claim 1, **characterized in that** the rotor blades (17) and the interior wall (18) of the gas centrifuge (1) form chambers (19) flowed through by combustion air (12).

4. An apparatus according to claim 3, **characterized in that** the rotor blades (17) are at least partly disposed on a slant relative to the rotor axis of rotation (7) to increase air flow through the gas centrifuge (1).

5. An apparatus according to any of claims 1 to 4, **characterized in that** an annular receiving channel (22) for oxygen-enriched combustion air ($O_2$) to enter is provided on the outlet-side axial end of the gas centrifuge (1).

6. An apparatus according to claim 5, **characterized in that** the receiving channel (22) is formed by a concentric partition (24).

7. An apparatus according to claim 6, **characterized in that** the partition (24) protrudes into slots (26) provided in the rotor blades (17).

8. An apparatus according to any of claims 5 to 7, **characterized in that** oxygen-depleted air ($N_2$) is released into the atmosphere through outlet openings (25) in the gas centrifuge housing (6) between the receiving channel (22) and the rotor axis of rotation (7).

**Revendications**

1. Dispositif pour enrichir en oxygène l'air de combustion des moteurs à combustion interne, comprenant une centrifuge de gaz (1) qui est entraînée par une turbine à gaz d'échappement (2) entraînée par les gaz d'échappement de combustion (5), **caractérisé en ce que** dans l'espace intérieur (8) de la centrifuge de gaz (1) est prévu un rotor (9) à travers lequel passe axialement l'air de combustion (11) pour appliquer une force centrifuge sur les molécules dans l'air, dont les pales (17) possèdent une longueur axiale qui est supérieure au plus grand rayon du rotor (9).

2. Dispositif selon la revendication 1, **caractérisé en ce que** le boîtier (6) de la centrifuge de gaz (1) est bridée sur la conduite d'échappement (4).

3.  Dispositif selon la revendication 1, **caractérisé en ce que** les pales de rotor (17) et la paroi intérieure (18) de la centrifuge de gaz (1) forment des chambres (19) traversées par l'air de combustion (12).

4.  Dispositif selon la revendication 3, **caractérisé en ce que** pour augmenter le débit d'air à travers la centrifuge de gaz (1), les pales de rotor (17) sont agencées en biais au moins partiellement par rapport à l'axe (12) des pales de rotor.

5.  Dispositif selon l'une des revendications 1 à 4, **caractérisé en ce qu'**à l'extrémité axiale, côté sortie, de la centrifuge de gaz (1) est prévue une goulotte de réception (22) de forme annulaire dans laquelle entre l'air de combustion ($O_2$) enrichi en oxygène.

6.  Dispositif selon la revendication 5, **caractérisé en ce que** la goulotte de réception (22) est formée par une cloison de séparation (24) concentrique.

7.  Dispositif selon la revendication 6, **caractérisé en ce que** la cloison de séparation (24) fait saillie dans des fentes (26) prévues dans les pales de rotor (17).

8.  Dispositif selon l'une des revendications 5 à 7, **caractérisé en ce que** l'air appauvri en oxygène ($N_2$) sort dans l'atmosphère à travers des orifices de sortie (25) dans le boîtier (6) de la centrifuge de gaz entre la goulotte de réception (22) et l'axe (12) des pales de rotor.

# FIG. 1

# FIG. 3

# FIG. 2